# FASCICULE DE BREVET EUROPEEN

(11) **EP 3 948 005 B1**
(45) Date de publication et mention de la délivrance du brevet: **10.05.2023**
(21) Numéro de dépôt: 20713053.5
(22) Date de dépôt: 27.03.2020
(51) Int. Cl.: F16D 65/00, F16D 65/092

(54) **SYSTÈME DE FREINAGE AVEC ASPIRATION CENTRIFUGE DANS RAINURE DE LA GARNITURE**
BREMSSYSTEM MIT ZENTRIFUGALABSAUGUNG IN EINER BREMSBELAGRILLE
BRAKE SYSTEM WITH CENTRIFUGAL SUCTION IN A BRAKE PAD GROOVE

(30) Priorité: 28.03.2019 FR 1903220
(43) Date de publication de la demande: 09.02.2022
(73) Titulaire: Tallano Technologie, 75015 Paris (FR)
(72) Inventeur: ADAMCZAK, Loïc, 92100 BOULOGNE BILLANCOURT (FR); LE BOULAIRE, Thibaut, 92100 BOULOGNE BILLANCOURT (FR)
(74) Mandataire: Plasseraud IP
(86) Numéro de dépôt international: PCT/EP2020/058818
(87) Numéro de publication internationale: WO 2020/193776

(56) Documents cités:
- CN-A- 109 307 029
- FR-A1- 3 057 040
- JP-A- 2007 192 268
- KR-A- 19980 061 265
- KR-A- 20040 033 884

## Description

La présente invention est relative aux systèmes de freinage non polluants, destinés à être utilisés dans des machines comportant un élément rotatif dont on veut freiner la rotation, tels que par exemple des véhicules routiers ou ferroviaires, des éoliennes.

Dans de tels systèmes de freinage, des particules et poussières sont émises par le freinage à friction comme résultat de l'abrasion de plaquettes de frein contre l'élément rotatif. Cet élément rotatif est par exemple la roue du véhicule, ou un disque entrainé par la roue du véhicule. Il est connu que ces particules dispersées dans le milieu ambiant sont nocives pour la santé des individus. En outre la progression des motorisations électriques pour les véhicules automobiles a renforcé le besoin de traiter les particules et poussières résultant de l'abrasion des systèmes de freinage à friction.
Il existe donc un besoin de capter ces particules et poussières avant qu'elles soient libérées dans le milieu ambiant.

Ainsi, on connait le document FR 3 057 040 qui décrit un système de freinage comportant une plaquette de frein 10, cette plaquette comprenant une semelle 1 avec une première face 13 et une deuxième face 14, et une garniture 2 en matériau de friction fixée sur la première face 13, la garniture 2 étant délimitée par une face de friction 26, une face de fixation 20, un bord intérieur 23, un bord extérieur 24, un bord arrière 21, et un bord avant 22. La garniture 2 est pourvue d'au moins une rainure de collecte 3 qui est ouverte sur la face de friction 26, qui s'étend de sa première extrémité 31 du côté du bord intérieur 23, et qui débouche à sa seconde extrémité 32 du côté du bord extérieur 24 et sur ledit bord extérieur 24. La semelle 1 comporte un trou 17 en communication fluide avec la rainure de collecte 3. Le trou 17 est relié à un système de collecte par un tuyau d'aspiration 40 apte à aspirer l'air et les particules et poussières circulant dans la rainure 3.

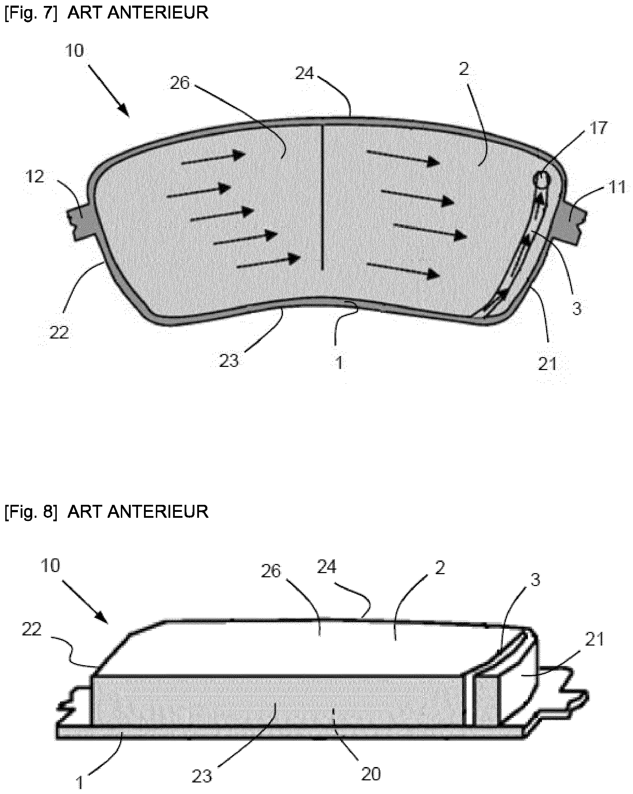

Un tel système de freinage est illustré en figures 7 et 8, et représente l'art antérieur.

Ce système de freinage présente cependant des inconvénients.

En effet, des particules et poussières continuent à s'échapper en quantité indésirable durant les phases de freinage.

### Description de l'invention

La présente invention vise à remédier à ces inconvénients.

L'invention vise à proposer un système de freinage pour lequel la captation des particules et poussières émises par la garniture et l'élément rotatif soit optimisée, et dont la construction soit la plus simple possible.

Ce but est atteint avec un système de freinage comme défini dans la revendication 1, notamment grâce au fait que le système de freinage discuté ci-dessus comporte en outre un système de collecte qui comprend un tuyau de collecte par lequel l'air est apte à circuler, l'orifice d'entrée d'air du tuyau de collecte étant situé en regard de la seconde extrémité.

Grâce à ces dispositions, la récupération des particules et poussières par le système de collecte est plus efficace, car l'air circule dans la rainure depuis le bord intérieur vers le bord extérieur de la garniture. Ce sens étant le sens naturel (sans aspiration) de circulation de l'air dans la rainure sous l'effet de la force centrifuge, la captation des particules et poussières dans le tuyau de collecte est plus efficace.

Avantageusement le tuyau de collecte n'est pas en contact avec la garniture.

Ainsi, il n'existe pas de génération, après la phase de freinage, d'un couple résiduel plus ou moins important lorsque les garnitures et les plaquettes s'écartent de l'élément rotatif.

Avantageusement, la semelle est continue tout le long de la au moins une rainure.

Ainsi, la fabrication de la plaquette de freinage est simplifiée, puisqu'il n'est pas nécessaire de percer ou modifier la semelle au niveau de la rainure.

Avantageusement, la au moins une rainure est située à proximité du bord arrière.

Ainsi, la captation des particules et poussières par la rainure est optimisée, ces particules et poussières ayant tendance à circuler de l'avant vers l'arrière de la garniture, puisque ce sens de circulation est le sens de déplacement de l'élément rotatif par rapport à la garniture au repos.

Avantageusement, la garniture est pourvue d'une deuxième rainure qui est située sensiblement à mi-distance entre le bord avant et le bord arrière.

Ainsi, le comportement vibratoire de l'ensemble garnitures-disque lors du freinage est amélioré.

Avantageusement, la garniture est pourvue d'une rainure supplémentaire qui est située à proximité du bord avant.

Ainsi, le système selon l'invention fonctionne de façon aussi efficace dans les deux sens de rotation de l'élément rotatif par rapport à la garniture, ce qui est avantageux pour les véhicules qui doivent freiner dans les deux sens, tels que les véhicules ferroviaires.

Avantageusement, le système de collecte comporte un mécanisme d'aspiration qui est apte à aspirer dans le tuyau de collecte l'air provenant de la au moins une rainure de collecte.

Ainsi, la collecte des particules et poussières dans le tuyau de collecte est plus efficace.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] est une vue de dessus d'une plaquette de frein d'un système de freinage selon l'invention,
[Fig. 2] est une vue en perspective d'une plaquette de frein d'un système de freinage selon l'invention,
[Fig. 3] est une vue en coupe le long de la rainure de collecte d'une plaquette de frein d'un système de freinage selon l'invention, selon la ligne III-III de la figure 2,
[Fig. 4] est une vue en coupe le long de la rainure de collecte d'une plaquette de frein d'une variante d'un système de freinage selon l'invention,
[Fig. 5] est une vue de dessus d'une plaquette de frein d'un système de freinage selon un autre mode de réalisation de l'invention,
[Fig. 6] est une vue en perspective d'un système de freinage selon l'invention monté sur un disque rotatif,
[Fig. 7], déjà décrite, représente une plaquette selon l'art antérieur en vue de dessus,
[Fig. 8], déjà décrite, représente une plaquette selon l'art antérieur en perspective

### Description détaillée de l'invention

La présente invention concerne un système de freinage qui comporte une plaquette de frein 10 d'un frein pour le freinage d'un élément rotatif 9 d'une machine. L'invention est décrite ci-dessous dans le cas où la machine est un véhicule routier où ce frein est un frein à disque. Cependant l'invention s'applique aussi bien au cas d'une plaquette de frein dans un frein à semelle qui frotte sur une roue, utilisé dans les véhicules sur rails (ferroviaire), ou au cas d'une plaquette de frein utilisée dans toute autre machine industrielle (par exemple dans le cas d'une éolienne). Dans tous les cas, le freinage d'un élément rotatif de la machine est réalisé par le frottement de la plaquette de frein sur cet élément rotatif lors de sa rotation.

Dans un frein à disque, le freinage s'effectue par friction entre un disque (qui est l'élément rotatif 9) qui est solidaire d'une roue du véhicule, et deux plaquettes de frein 10 qui sont plaquées de part et d'autre de ce disque 9 afin de le prendre en sandwich. Le disque 9 s'étend dans un plan principal et a pour axe de rotation un axe A qui est perpendiculaire à ce plan principal.

Chacune des plaquettes 10 s'étend dans ce plan principal de telle sorte que l'épaisseur d'une plaquette 10 s'étend selon l'axe de rotation A.

Le disque 9 tourne autour de l'axe de rotation A avec un sens de rotation FW, ce qui définit une direction tangentielle T qui est tangente à la circonférence du disque 9 et orientée dans le sens de rotation FW, et une direction radiale R orthogonale à l'axe de rotation A dans le plan principal du disque 9.

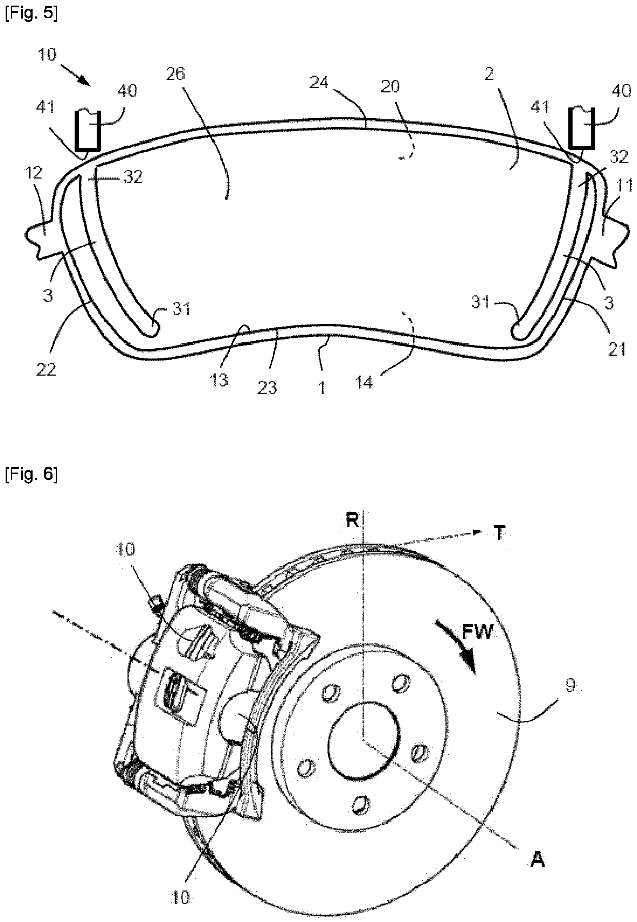

Ces éléments sont indiqués sur la figure 6, qui représente le dispositif de freinage monté sur le disque 9.

Dans la description qui suit les termes « intérieur » et « extérieur » désignent les bords ou zones de la plaquette de frein 10 (ou de ses composants) qui sont situés respectivement le plus proche et le plus éloigné de l'axe de rotation A, et les termes « avant » et « arrière » désignent les bords ou zones de la plaquette de frein 10 (ou de ses composants) qui sont situés en amont et en aval respectivement par rapport au sens de circulation des particules 28 émises par la garniture 2 (décrite ci-dessous) qui est également le sens de rotation FW.

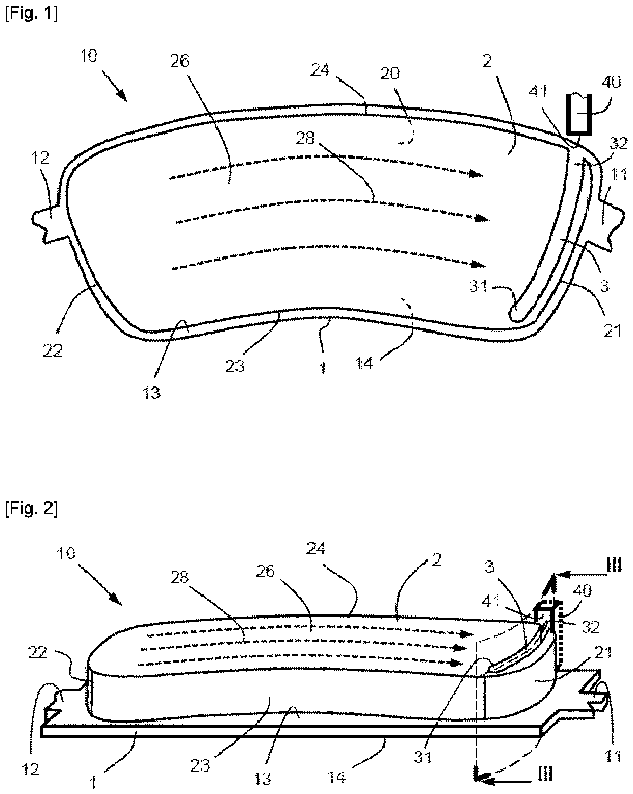

Comme illustré sur les figures 1 et 2, une plaquette de frein 10 comprend une semelle 1, aussi appelée embase. La semelle 1 est par exemple réalisée en matériau métallique. La semelle 1 est une plaque plane d'épaisseur sensiblement constante (par exemple entre 3 et 7 mm) dont la forme générale dans son plan principal est trapézoïdale avec des bords rectilignes ou courbes.

La semelle 1 comprend une première face 13 sur laquelle est fixée une garniture 2, et une deuxième face 14 qui est opposée à la première face 13. La semelle 1 comprend également deux tenons (11, 12), qui s'étendent dans le plan de la semelle 1 à deux extrémités latérales de celle-ci, et qui servent au maintien et au guidage de la plaquette 10.

La plaquette de frein 10 comprend en outre une garniture 2 constituée d'un matériau de friction. Par exemple ce matériau est un matériau appelé « ferodo ».

La garniture 2 est délimitée par une face de friction 26 (face « frottante »), une face de fixation 20 opposée à la face de friction 26 (ces deux faces étant parallèles) et fixée sur la semelle 1, un bord intérieur 23, un bord extérieur 24, un bord arrière 21 et un bord avant 22. Les bords extérieur 24, arrière 21, et avant 22 sont convexes ou rectilignes, le bord intérieur 23 est concave ou rectiligne.

La face de friction 26 se rapproche progressivement de la semelle 1 au fur et à mesure de l'usure de la garniture 2. L'épaisseur de la garniture 2 (mesurée selon l'axe de rotation A) diminue par conséquent avec son usure.

En fonctionnement, la garniture 2 (et l'élément rotatif 9) relâche des particules 28 à cause de la friction entre la garniture 2 et le disque 9. Les trajets des particules 28 le long de la face de friction 26 sont représentés en pointillés sur les figures 1 et 2.

La garniture 2 est pourvue d'au moins une rainure de collecte 3 ouverte sur la face de friction 26.

La rainure 3 comporte une première extrémité 31 et une seconde extrémité 32. La rainure 3 s'étend de sa première extrémité 31 du côté du bord intérieur 23, et débouche à sa seconde extrémité 32 sur le bord extérieur 24.

Par « la rainure 3 s'étend à son extrémité du côté d'un bord », on signifie que cette extrémité de la rainure 3 est située à proximité du bord. A cette extrémité la rainure peut être soit débouchante (au travers de la semelle ou sur ce bord), soit non-débouchante.

Par « la rainure 3 débouche à son extrémité du côté d'un bord », on signifie que la rainure 3 débouche à cette extrémité à proximité du bord, c'est-à-dire soit au travers de la semelle 1, soit directement sur ce bord.

Dans tous les cas, la rainure 3 débouche à cette extrémité hors de la face de friction 26.

Selon l'invention, la rainure 3 débouche à sa seconde extrémité 32 directement sur le bord extérieur 24.

La profondeur de la (ou des) rainure 3 est par exemple égale à la hauteur de la garniture 2, c'est-à-dire que le fond de la rainure 3 coïncide avec la première face 13 de la semelle 1. Alternativement la profondeur de la (ou des) rainure 3 est inférieure à la hauteur de la garniture 2.

Par exemple, la (ou les) rainure de collecte 3 a une section rectangulaire constante de son extrémité amont à son extrémité aval, et est donc d'épaisseur constante.

Par exemple, la rainure de collecte 3 est située à proximité du bord arrière 21. Cette configuration permet de collecter dans cette rainure 3 les particules/poussières issues du freinage de façon plus efficace, étant donné que les particules circulent naturellement de l'avant vers l'arrière de la garniture 2. En effet, ce sens de circulation est le sens de déplacement de l'élément rotatif 9 par rapport à la garniture 2 au repos.

En option, la garniture 2 comporte en outre une deuxième rainure de collecte 3 qui est située sensiblement à mi-distance entre le bord avant 22 et le bord arrière 21.

Cette position de la deuxième rainure de collecte 3 permet de minimiser les vibrations indésirables de la garniture 2.

Le système de freinage comporte un système de collecte qui comprend un tuyau de collecte 40 par lequel l'air est apte à circuler. Le tuyau de collecte 40 comporte un orifice d'entrée 41 d'air qui est situé en regard de la seconde extrémité 32 de la rainure 3, comme illustré sur les figures 1 à 4. L'air circulant dans la rainure 3 pénètre dans le tuyau de collecte 40 par cet orifice d'entrée 41.

Avantageusement, le système de collecte comporte un mécanisme d'aspiration (non représenté) qui est apte à aspirer dans le tuyau de collecte 40 l'air provenant de la rainure 3. La collecte des particules/poussières (provenant de la rainure 3) dans le tuyau de collecte 40 est ainsi plus efficace.

Cette configuration présente en outre l'avantage que la circulation de l'air forcée par le mécanisme d'aspiration du système de collecte s'effectue dans le même sens que la circulation naturelle de l'air dans la rainure 3. En effet, sous l'influence de la force centrifuge, l'air circule naturellement depuis la première extrémité 31 vers la seconde extrémité 32. Le système de collecte est donc plus efficace.

Comme illustré en figures 1 à 3, la rainure 3 est non-débouchante au niveau du bord intérieur 23. Une paroi formée par la garniture 2 sépare donc la première extrémité 31 du bord intérieur 23. La fabrication de la garniture 2 est ainsi simplifiée.

Avantageusement, la rainure 3 est également non-débouchante au travers de la semelle 1. Dans ce cas, la semelle 1 est continue tout le long de la rainure 3, c'est-à-dire qu'elle ne comporte pas de trou permettant le passage de l'air depuis la rainure 3 au travers de la semelle 1. La fabrication de la plaquette de freinage est alors simplifiée, puisqu'il n'est pas nécessaire de modifier la semelle 1 (par exemple par perçage) au niveau de la rainure 3.

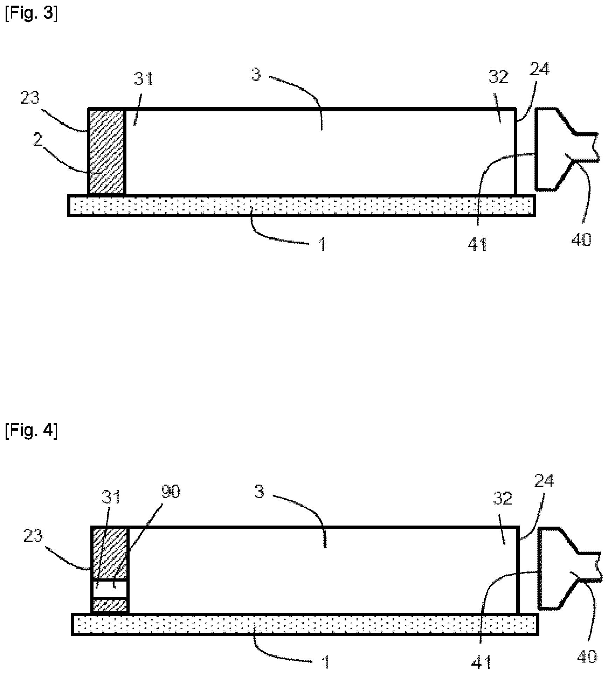

En variante, la rainure 3 est conformée au niveau du bord intérieur 23 en un canal 90 qui met en communication le reste de la rainure 3 et le bord intérieur 23 de telle sorte que la rainure 3 débouche sur le bord intérieur 23, comme représenté en figure 4. Ainsi, ce canal 90 présente une paroi latérale continue entourée de garniture 2, dont la première extrémité s'ouvre sur le reste de la rainure 3 et dont la seconde extrémité (qui est ainsi la première extrémité 31 de la rainure 3) s'ouvre sur le bord intérieur 23. Cette configuration améliore la circulation de l'air dans la rainure 3, y compris au fur et à mesure de l'usure de la garniture 2. Avantageusement, le canal 90 est le plus proche possible de la semelle 1 afin de maximiser l'épaisseur utile de la garniture 2 en fonctionnement.

Le canal 90 est de section constante, par exemple de section circulaire. Alternativement, le canal 90 présente une section de sa première extrémité qui est supérieure à sa section de sa seconde extrémité de telle sorte que l'air pénètre plus aisément dans la rainure 3 par le canal 90.

Avantageusement, dans tous les modes de réalisation, il n'y a pas de contact du tuyau de collecte 40 avec la garniture 2. Ainsi, il n'existe pas de génération, après la phase de freinage, d'un couple résiduel plus ou moins important lorsque les garnitures 2 et les semelles 1 s'écartent de l'élément rotatif, ce couple résiduel étant généré par le fait qu'un tuyau est en contact avec la garniture 2 ou la semelle 1.

Dans cette configuration, le tuyau de collecte 40 est situé en dehors de la zone de déplacement de la semelle 1 (déplacement dont l'amplitude résulte de l'usure de la garniture 2 durant la vie de la plaquette de frein 10) de telle sorte que le tuyau de collecte 40 n'est pas en contact avec la garniture 2 ou la semelle 1 durant toute la durée de vie de la plaquette de frein 10.

Dans cette configuration, avantageusement, l'orifice d'entrée 41 du tuyau de collecte 40 est en outre situé aussi près que possible du bord extérieur 24, de façon à maximiser le passage de l'air entre la rainure 3 d'une part et le tuyau de collecte 40 d'autre part.

La figure 5 illustre le cas où la garniture 2 est pourvue d'une rainure 3 supplémentaire qui est située à proximité du bord avant 22, en plus de la première rainure 3 située à proximité du bord arrière 21. La garniture 2 comporte alors deux rainures 3.

Le système de collecte comprend donc un premier tuyau de collecte 40 dans lequel l'air provenant de la première rainure 3 peut circuler, et un deuxième tuyau de collecte 40 dans lequel l'air provenant de la rainure 3 supplémentaire peut circuler. Chacun de ces tuyaux est relié à un élément qui fait partie du dispositif de collecte.

Avantageusement, le système de collecte comporte un mécanisme d'aspiration qui est apte à aspirer dans chacun des tuyaux de collecte 40 l'air provenant des rainures 3.

Cette configuration avec double rainure 3 est adapté aux véhicules, tels que des véhicules ferroviaires, qui sont soumis à des freinages dans les deux sens. En effet, dans ce cas les particules 28 libérées par la friction de la garniture 2 sur l'élément rotatif peuvent circuler soit du bord avant 22 vers le bord arrière 21, soit du bord arrière 21 vers le bord avant 22. La présence de deux rainures 3 permet de capter les particules dans une rainure 3 quel que soit le sens de freinage du véhicule.

Selon encore un autre mode de réalisation, la garniture 2 comporte une autre rainure 3 (appelée deuxième rainure) qui est située sensiblement à mi-distance entre le bord avant 22 et le bord arrière 21, cette deuxième rainure 3 ayant été décrite ci-dessus. La rainure 3 supplémentaire qui est située à proximité du bord avant 22 est alors une troisième rainure 3. Ce mode de réalisation permet ainsi à la fois de minimiser les vibrations indésirables de la garniture 2 et de capter les particules dans une rainure 3 quel que soit le sens de freinage du véhicule.

Avantageusement, le système de collecte comporte un mécanisme d'aspiration qui est apte à aspirer dans chacun des tuyaux de collecte 40 l'air provenant des rainures 3.

D'une manière générale, le mécanisme d'aspiration comporte un élément apte à aspirer de l'air par le tuyau de collecte 40. Par exemple cet élément est une pompe. Par exemple cet élément est situé en aval du tuyau de collecte 40 dans le sens naturel de circulation de l'air. Avantageusement, cet élément comporte un filtre.

En variante, l'élément apte à aspirer de l'air par le tuyau d'aspiration 40 est un bloc situé sur le trajet de l'air dans le tuyau d'aspiration 40 en aval de l'orifice d'entrée 41 et qui est conformé avec une entrée amont de section inférieure à sa sortie aval.

## Revendications

1. Système de freinage comportant une plaquette de frein (10), ladite plaquette comprenant une semelle (1) avec une première face (13) et une deuxième face (14), et une garniture (2) en matériau de friction fixée sur ladite première face (13), la garniture (2) étant délimitée par une face de friction (26), une face de fixation (20), un bord intérieur (23), un bord extérieur (24), un bord arrière (21), un bord avant (22), ladite garniture (2) étant pourvue d'au moins une rainure de collecte (3) qui est ouverte sur la face de friction (26), qui s'étend de sa première extrémité (31) du côté dudit bord intérieur (23), et qui débouche à sa seconde extrémité (32) du côté dudit bord extérieur (24) et sur ledit bord extérieur (24), ledit système de freinage étant **caractérisé en ce qu'**il comporte en outre un système de collecte qui comprend un tuyau de collecte (40) par lequel l'air est apte à circuler, l'orifice d'entrée (41) d'air dudit tuyau de collecte (40) étant situé en regard de ladite seconde extrémité (32).

2. Système de freinage selon la revendication 1, **caractérisé en ce que** le tuyau de collecte (40) n'est pas en contact avec ladite garniture (2).

3. Système de freinage selon la revendication 1 ou 2, **caractérisé en ce que** ladite semelle (1) est continue tout le long de ladite au moins une rainure (3).

4. Système de freinage selon l'une quelconque des revendications 1 à 3, **caractérisé en ce que** ladite au moins une rainure (3) débouche à sa première extrémité (31) du côté dudit bord intérieur (23).

5. Système de freinage selon l'une quelconque des revendications 1 à 4, **caractérisé en ce que** ladite au moins une rainure (3) est située à proximité dudit bord arrière (21).

6. Système de freinage selon la revendication 5, **caractérisé en ce que** ladite garniture (2) est pourvue d'une deuxième rainure (3) qui est située sensiblement à mi-distance entre ledit bord avant (22) et ledit bord arrière (21).

7. Système de freinage selon la revendication 5 ou 6, **caractérisé en ce que** ladite garniture (2) est pourvue d'une rainure (3) supplémentaire qui est située à proximité dudit bord avant (22).

8. Système de freinage selon l'une quelconque des revendications précédentes, **caractérisé en ce que** ledit système de collecte comporte un mécanisme d'aspiration qui est apte à aspirer dans ledit tuyau de collecte (40) l'air provenant de ladite au moins une rainure de collecte (3).

## Patentansprüche

1. Bremssystem mit einem Bremsbelag (10), wobei der Bremsbelag einen Reibbelagsträger (1) mit einer ersten Seite (13) und einer zweiten Seite (14) und einen Einsatz (2) aus Reibmaterial aufweist, der auf der ersten Seite (13) befestigt ist, wobei der Einsatz (2) durch eine Reibfläche (26), eine Befestigungsfläche (20), einen inneren Rand (23), einen äußeren Rand (24), einen hinteren Rand (21) und einen vorderen Rand (22) begrenzt ist, wobei der Einsatz (2) mit mindestens einer Sammelnut (3) versehen ist, die auf der Reibfläche (26) offen ist, die sich an ihrem ersten Ende (31) auf die Seite des inneren Randes (23) erstreckt und die an ihrem zweiten Ende (32) auf der Seite des äußeren Randes (24) mündet,
wobei das genannte Bremssystem **dadurch gekennzeichnet ist,**
**dass** es außerdem ein Sammelsystem aufweist, welches eine Sammelleitung (40) aufweist, die geeignet ist, Luft zirkulieren zu lassen, wobei sich die Lufteintrittsöffnung (41) der Sammelleitung (40) gegenüber dem zweiten Ende (32) befindet.

2. Bremssystem nach Anspruch 1,
**dadurch gekennzeichnet,**
**dass** die Sammelleitung (40) nicht in Kontakt mit dem Einsatz (2) ist.

3. Bremssystem nach Anspruch 1 oder 2,
**dadurch gekennzeichnet,**
**dass** der Reibbelagsträger (1) ununterbrochen entlang der mindestens einen Nut (3) verläuft.

4. Bremssystem nach irgendeinem der Ansprüche 1 bis 3,
**dadurch gekennzeichnet,**
**dass** die mindestens eine Nut (3) an ihrem ersten Ende (31) auf der Seite der Innenkante (23) mündet.

5. Bremssystem nach irgendeinem der Ansprüche 1 bis 4,
**dadurch gekennzeichnet,**
**dass** die mindestens eine Nut (3) in der Nähe des hinteren Rands (21) angeordnet ist.

6. Bremssystem nach Anspruch 5,
**dadurch gekennzeichnet,**
**dass** der Einsatz (2) mit einer zweiten Nut (3) versehen ist, die im Wesentlichen auf halbem Abstand zwischen dem vorderen Rand (22) und dem hinteren Rand (21) angeordnet ist.

7. Bremssystem nach Anspruch 5 oder 6,
**dadurch gekennzeichnet,**
**dass** der Einsatz (2) mit einer zusätzlichen Nut (3) versehen ist, die in der Nähe des vorderen Randes (22) angeordnet ist.

8. Bremssystem nach irgendeinem der vorhergehenden Ansprüche,
**dadurch gekennzeichnet,**
**dass** das Sammelsystem einen Saugmechanismus aufweist, der dazu geeignet ist, in die Sammelleitung (40) Luft zu saugen, die aus der mindestens einen Sammelnut (3) stammt.

## Claims

1. Braking system comprising a brake pad (10), said pad comprising a backing plate (1) with a first face (13) and a second face (14), and a lining (2) made of friction material and fixed to said first face (13), the lining (2) being delimited by a friction face (26), a mounting face (20), an inner edge (23), an outer edge (24), a rear edge (21), and a front edge (22), said lining (2) being provided with at least one collection groove (3) which is open to the friction face (26), which extends from its first end (31) of said inner edge (23) and which emerges at its second end (32) of said outer edge (24) and on said outer edge (24), said braking system being **characterized in that** it further comprises a collection system which comprises a collection pipe (40) through which air is able to flow, the air inlet orifice (41) of said collection pipe (40) being located opposite said second end (32).

2. Braking system according to claim 1, **characterized in that** the collection pipe (40) is not in contact with said lining (2).

3. Braking system according to claim 1 or 2, **characterized in that** said backing plate (1) is continuous for the entire length of said at least one groove (3).

4. Braking system according to any one of claims 1 to 3, **characterized in that** said at least one groove (3) has an opening at its first end (31) towards said inner edge (23).

5. Braking system according to any one of claims 1 to 4, **characterized in that** said at least one groove (3) is located near said rear edge (21).

6. Braking system according to claim 5, **characterized in that** said lining (2) is provided with a second groove (3) located substantially midway between said front edge (22) and said rear edge (21).

7. Braking system according to claim 5 or 6, **characterized in that** said lining (2) is provided with an additional groove (3) located near said front edge (22).

8. Braking system according to any one of the preceding claims, **characterized in that** said collection system comprises a suction mechanism which is able to suck the air from said at least one collection groove (3) into said collection pipe (40).
